# EUROPÄISCHE PATENTSCHRIFT

(11) **EP 3 860 904 B1**
(45) Veröffentlichungstag und Bekanntmachung des Hinweises auf die Patenterteilung: **09.08.2023**
(21) Anmeldenummer: 19769125.6
(22) Anmeldetag: 12.09.2019
(51) Int. Cl.: B60D 1/01, B60D 1/62, B62D 53/08

(54) **SATTELKUPPLUNG EINES ZUGFAHRZEUGS, ANORDNUNG AUS EINER SATTELKUPPLUNG UND EINEM KÖNIGSZAPFEN SOWIE VERFAHREN ZUR ERMITTLUNG EINES DREHWINKELS AN DER ANORDNUNG**
FIFTH-WHEEL COUPLING OF A TOWING VEHICLE, ASSEMBLY OF A FIFTH-WHEEL COUPLING AND A KINGPIN, AND METHOD FOR DETERMINING AN ANGLE OF ROTATION AT THE ASSEMBLY
SELLETTE D'ATTELAGE D'UN VÉHICULE DE TRACTION, ENSEMBLE COMPOSÉ D'UNE SELLETTE D'ATTELAGE ET D'UN PIVOT, AINSI QUE PROCÉDÉ DE DÉTERMINATION D'UN ANGLE DE ROTATION SUR L'ENSEMBLE

(30) Priorität: 01.10.2018 DE 102018216825
(43) Veröffentlichungstag der Anmeldung: 11.08.2021
(73) Patentinhaber: ZF Friedrichshafen AG, 88046 Friedrichshafen (DE)
(72) Erfinder: SCHREIBMÜLLER, Nicolas, 88074 Meckenbeuren (DE); ZANELLA, Mauro Cesar, 88046 Friedrichshafen (DE); LIMA, Guilherme, 88046 Friedrichshafen (DE); NIETO LARA, David, 88069 Tettnang (DE)
(74) Vertreter: ZF Friedrichshafen AG
(86) Internationale Anmeldenummer: PCT/EP2019/074311
(87) Internationale Veröffentlichungsnummer: WO 2020/069832

(56) Entgegenhaltungen:
- EP-A1- 2 910 099
- DE-A1-102016 012 663
- US-A1- 2005 130 783
- US-A1- 2018 057 052

## Beschreibung

Die Erfindung betrifft eine Sattelkupplung eines Zugfahrzeugs. Weiterhin betrifft die Erfindung eine Anordnung aus einer Sattelkupplung und einem Königszapfen sowie Verfahren zur Ermittlung eines Drehwinkels zwischen einem Zugfahrzeug und einem Sattelaufleger, die eine solche Anordnung aufweisen.

Aus der EP 2 899 101 A1 ist ein Königszapfen eines Sattelauflegers bekannt, mithilfe dessen ein Drehwinkel zwischen einem Zugfahrzeug und einem an das Zugfahrzeug gekoppelten Sattelaufleger erfasst werden kann. Dabei ist nach der EP 2 899 101 A1 stets eine spezielle konstruktive Ausführung des Königszapfens erforderlich, um entweder in den Königszapfen selbst eine Messeinrichtung zu integrieren oder durch Vorsehen eines Markierungsrings oder eines Zahnrings am Königszapfen ein Zusammenspiel mit einer dem Sattelaufleger zugeordneten Messeinrichtung zu ermöglichen. Dies ist von Nachteil, da bei Sattelauflegern mit konventionellen Königszapfen ein Drehwinkel zwischen Zugfahrzeug und Sattelaufleger nicht ermittelt werden kann. Eine weitere Sattelkupplung eines Zugfahrzeugs gemäß der Merkmale der Präambel von Anspruch 1 werden in der US 2005/130783 gezeigt.

Hiervon ausgehend liegt der Erfindung die Aufgabe zu Grunde, eine neuartige Sattelkupplung eines Zugfahrzeugs, eine Anordnung aus der Sattelkupplung und einem Königszapfen sowie ein Verfahren zur Ermittlung eines Drehwinkels zwischen einem Zugfahrzeug und einem Sattelaufleger, die eine solche Anordnung aufweisen, zu schaffen.

Diese Aufgabe wird durch eine Sattelkupplung eines Zugfahrzeugs gemäß Patentanspruch 1 gelöst. Die Sattelkupplung weist mindestens ein Kontaktrad auf, welches dann, wenn an die Sattelkupplung ein Königszapfen gekoppelt ist, radial außen an einen Abschnitt des Königszapfens reibschlüssig anstellbar ist, um bei einer Drehung des Abschnitts des Königszapfens durch Reibkräfte zwischen dem Abschnitt des Königszapfens und dem jeweiligen Kontaktrad eine Drehung des jeweiligen Kontaktrads zu bewirken. Die Sattelkupplung weist ferner einen dem jeweiligen Kontaktrad zugeordneten Winkelmesser auf, der die Drehung des jeweiligen Kontaktrads messtechnisch erfasst.

Die Erfindung erfordert keine spezielle konstruktive Ausführung eines Königszapfens an einem Sattelaufleger. Auch dann, wenn ein Sattelaufleger mit einem konventionellen Königszapfen ausgelegt ist, kann ein Drehwinkel zwischen einem Zugfahrzeug und einem Sattelaufleger ermittelt werden. Es muss lediglich am Zugfahrzeug die erfindungsgemäße Sattelkupplung bereitgehalten werden. Am Sattelaufleger sind keine konstruktiven Änderungen erforderlich.

Nach einer vorteilhaften Weiterbildung der Erfindung weist das jeweilige Kontaktrad eine gummierte Außenfläche auf, die am Abschnitt des Königszapfens reibschlüssig anstellbar ist. Dann, wenn das jeweilige Kontaktrad der Sattelkupplung eine gummierte Außenfläche aufweist, kann der Reibschluss zwischen dem jeweiligen Kontaktrad und dem jeweiligen konventionellen Königszapfen des Sattelauflegers besonders vorteilhaft bereitgestellt werden.

Erfindungsgemäß weist die Sattelkupplung drei Kontakträder mit jeweils einem demselben zugeordneten Winkelmesser auf. Dann, wenn mehrere Kontakträder vorhanden sind, kann die Messsicherheit für die Ermittlung des Drehwinkels dadurch erhöht werden, dass die Messsignale der einzelnen Kontakträder bzw. der den einzelnen Kontakträdern zugeordneten Winkelmesser untereinander abgeglichen werden.

Ferner weist die Sattelkupplung eine Stelleinrichtung auf, über die dann, wenn an die Sattelkupplung ein Königszapfen gekoppelt ist, das oder das jeweilige Kontaktrad an den Abschnitt des Königszapfens anstellbar ist. Über eine solche Stelleinrichtung kann dann, wenn an die Sattelkupplung ein Königszapfen gekoppelt ist, das jeweilige Kontaktrad zuverlässig an den Königszapfen angestellt werden.

Die Anordnung aus Sattelkupplung und Königszapfen ist in Anspruch 3 definiert. Verfahren zur Ermittlung eines Drehwinkels zwischen einem Zugfahrzeug und einem Sattelaufleger, die eine solche Anordnung aufweisen, sind in Ansprüchen 4 und 5 definiert.

Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematische Seitenansicht eines Zugfahrzeugs mit einem an das Zugfahrzeug gekoppelten Sattelaufleger,
- Fig. 2: eine Draufsicht aus Fig. 1,
- Fig. 3: eine schematische Ansicht einer Sattelkupplung des Zugfahrzeugs zusammen mit einem Königszapfen des Sattelauflegers gemäß dem Detail III der Fig. 1;
- Fig. 4: eine Draufsicht auf ein Detail der Fig. 3;
- Fig. 5: eine Draufsicht auf ein alternatives Detail der Fig. 3 in einer nicht erfindungsgemäßen Ausführung.

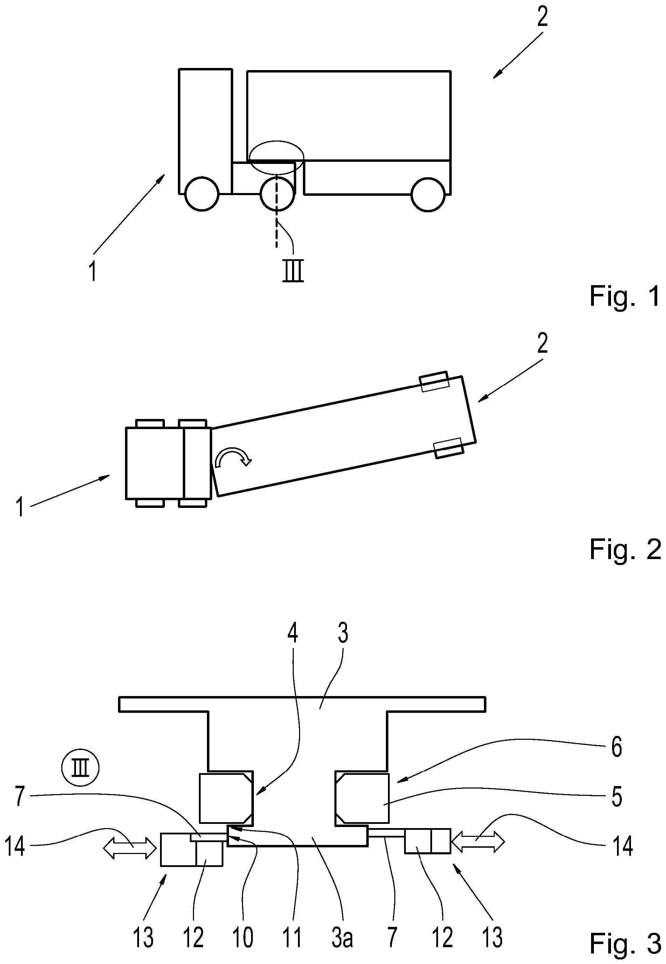

Fig. 1 und 2 zeigen stark schematisierte Darstellungen eines Zugfahrzeugs 1, an welches ein Sattelaufleger 2 angekoppelt ist. Zur Ankopplung des Sattelauflegers 2 an das Zugfahrzeug 1 umfasst das Zugfahrzeug 1 eine Sattelkupplung, mit der ein den Sattelaufleger 2 zugeordneter Königszapfen in Eingriff gebracht werden kann. Fig. 3 zeigt einen derartigen Königszapfen 3, der Bestandteil des Sattelauflegers 2 ist, wobei nach Fig. 3 in eine Ausnehmung 4 des Königszapfens 3 eine Verriegelungseinrichtung 5 der Sattelkupplung 6 des Zugfahrzeugs eingreift, um den Königszapfen 3 an der Sattelkupplung 6 zu fixieren.

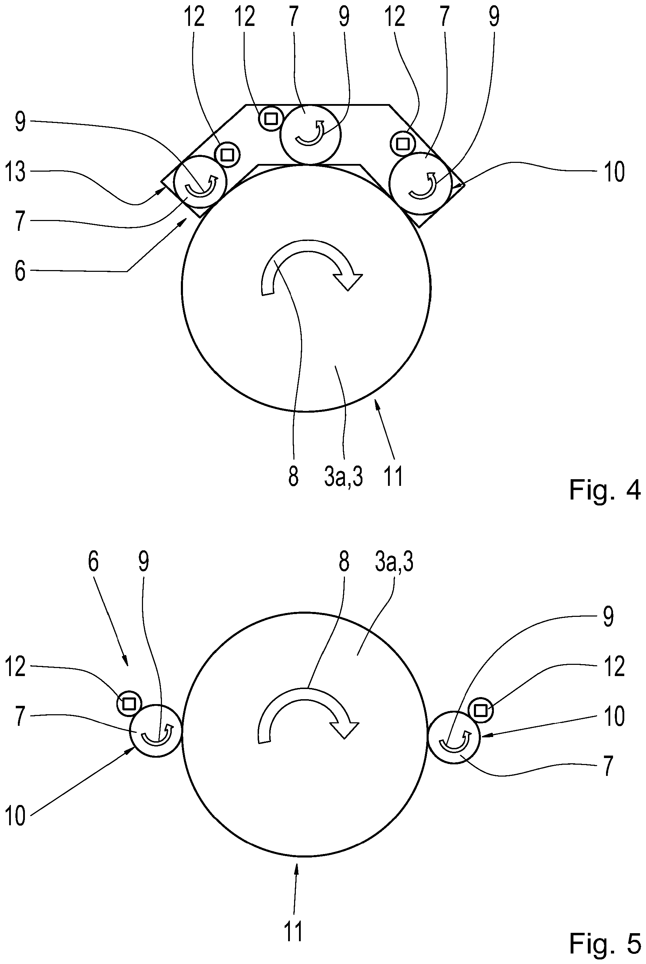

Die erfindungsgemäße Sattelkupplung 6 verfügt über mindestens ein Kontaktrad 7, welches dann, wenn an die Sattelkupplung 6 ein Königszapfen 3 gekoppelt ist, radial außen an einen Abschnitt 3a des Königszapfens 3 reibschlüssig anstellbar ist, um bei einer Drehung des Abschnitts 3a des Königszapfens 3 durch Reibkräfte zwischen dem Abschnitt 3a des Königszapfens 3 und dem jeweiligen Kontaktrad 7 eine Drehung des jeweiligen Kontaktrads 7 zu bewirken. In Fig. 4 und 5 visualisiert ein Pfeil 8 eine Drehung des Königszapfens 3 bzw. des Abschnitts 3a des Königszapfens 3, Pfeile 9 visualisieren eine Drehung der Kontakträder 7, die durch den reibschlüssigen Kontakt einer Außenfläche 10 des jeweiligen Kontaktrads 7 mit einer Außenfläche 11 des Abschnitts 3a des Königszapfens 3 bewirkt wird.

Jedem der Kontakträder 7 ist jeweils ein Winkelmesser 12 zugeordnet, wobei ein solcher Winkelmesser 12 auch als Encoder bezeichnet wird. Mithilfe des jeweiligen Winkelmessers 12 kann die Drehung des jeweiligen Kontaktrads 7 messtechnisch erfasst werden, um so letztendlich auf eine Drehung des Königszapfens 3 zu schlie-ßen.

Im Ausführungsbeispiel der Fig. 5 umfasst die Sattelkupplung 6 zwei Kontakträder 7, die sich, bezogen auf den Abschnitt 3a des Königszapfens 3, am Abschnitt 3a des Königszapfens 3 diametral gegenüberliegen. Im Ausführungsbeispiel der Fig. 4 sind drei Kontakträder 7 vorhanden, die sich über einen kleineren Umfangsabschnitt des Abschnitts 3a des Königszapfens 3 erstrecken. Im Bereich jedes Kontaktrads 7 kann mit einem dem jeweiligen Kontaktrad 7 zugeordneten Winkelmesser 12 die Drehung des jeweiligen Kontaktrads 7 individuell erfasst werden. Durch einen Abgleich der Messergebnisse der jeweiligen Winkelmesser 12 kann die Messsicherheit erhöht werden.

Besonders bevorzugt weist das jeweilige Kontaktrad 7 im Bereich seiner Außenfläche 10 eine Gummierung auf, die am Abschnitt 3a des Königszapfens 3 reibschlüssig anliegt. Über eine derartige gummierte Außenfläche 10 des jeweiligen Kontaktrads 7 kann der Reibschluss zwischen dem jeweiligen Kontaktrad 7 und dem Abschnitt 3a des Königszapfens 3 besonders vorteilhaft bereitgestellt werden.

Die erfindungsgemäße Sattelkupplung 6 verfügt über eine Stelleinrichtung 13, über die dann, wenn an die Sattelkupplung 6 ein Königszapfen 3 gekoppelt ist, das oder das jeweilige Kontaktrad 7 der Sattelkupplung 6 an den Abschnitt 3a des Königszapfens 3 anstellbar ist.

In Fig. 4 sind sämtliche gezeigten Kontakträder 7 an einer gemeinsamen Stelleinrichtung 13 aufgenommen, und zwar zusammen mit den den Kontakträdern 7 zugeordneten Winkelmessern 12, sodass dann über die gemeinsame Stelleinrichtung 13 sämtliche Kontakträder 7 gemeinsam an den Abschnitt 3a des Königszapfens 3 angestellt werden können, wenn ein Königszapfen 3 an die Sattelkupplung 6 angekoppelt ist.

Es ist auch möglich, für jedes Kontaktrad 7 und den jeweiligen Winkelmesser 12 des jeweiligen Kontaktrads 7 eine individuelle Stelleinrichtung 13 vorzusehen. Bevorzugt ist jedoch eine Ausführung, in welcher sämtliche Kontakträder 7 mit den Winkelmessern 12 über eine gemeinsame Stelleinrichtung 13 an den Königszapfen 3 anstellbar sowie von demselben abstellbar sind.

Auf den beiden Seiten der Fig. 3 sind unterschiedliche Ausführungen von Kontakträdern 7 und Winkelmessern 12 gezeigt, die sich durch die Relativposition von Kontaktrad 7 und Winkelmesser 12 unterscheiden. Doppelpfeile 14 der Fig. 3 visualisieren das Anstellen bzw. Abstellen der Kontakträder 7 an den Abschnitt 3a des Königszapfens 3.

Es ist möglich, die Kontakträder 7 derart federnd an der Sattelkupplung 6 zu lagern, dass dann, wenn ein Königszapfen 3 an die Sattelkupplung 6 angekoppelt ist, Federelemente das jeweilige Kontaktrad 7 automatisch gegen den Abschnitt 3a des Königszapfens 3 drücken.

Das Anstellen des jeweiligen Kontaktrads 7 an den Abschnitt 3a des Königszapfens 3 kann jedoch auch auf andere Art und Weise erfolgen, zum Beispiel durch eine pneumatische, elektrische oder hydraulischen Ansteuerung der jeweiligen Stelleinrichtung 13.

Die Erfindung betrifft nicht nur die Sattelkupplung 6 als solche, sondern auch eine Anordnung aus der oben beschriebenen Sattelkupplung 6, die Bestandteil eines Zugfahrzeugs 1 ist, sowie aus einer an die Sattelkupplung 6 angekoppelten Königszapfen 3, der Bestandteil eines Sattelauflegers 2 ist.

Ferner betrifft die Erfindung Verfahren zur Ermittlung eines Drehwinkels zwischen dem Zugfahrzeug 1 und dem Sattelaufleger 2, die eine solche Anordnung aufweisen, und zwar eine Anordnung aus einer erfindungsgemäßen Sattelkupplung 6 und einem konventionellen Königszapfen 3.

Dann, wenn das Zugfahrzeug 1 und der an das Zugfahrzeug 1 angekoppelte Sattelaufleger 3 eine definierte Wegstrecke mit einem Zugfahrzeug-Lenkeinschlag von Null, also eine Geradeausfahrt entlang der definierten Wegstrecke, zurückgelegt haben, wird das Messsignal des jeweiligen Winkelmessers 12 initialisiert, um nachfolgend, bezogen auf diese Initialisierung, den Drehwinkel zwischen dem Zugfahrzeug 1 und dem Sattelaufleger 2 auf Basis des Messsignals des jeweiligen Winkelmessers 12 zu erfassen.

Ebenso ist es zur Ermittlung des Drehwinkels zwischen dem Zugfahrzeug 1 und dem Sattelaufleger 2 möglich, dann, wenn Zugfahrzeug 1 mit angekoppeltem Sattelaufleger 2 mit konstanter Geschwindigkeit fährt, aus dem Messsignal des jeweiligen Winkelmessers 12 eine Winkelgeschwindigkeit zu ermitteln, und dann abhängig von der Winkelgeschwindigkeit des Königszapfens 3 den Drehwinkel zwischen dem Zugfahrzeug 1 und dem Sattelaufleger 2 zu ermitteln. Dies kann zum Beispiel kennfeldabhängig erfolgen, wobei als Eingangsgrößen des Kennfelds die Geschwindigkeit des Zugfahrzeugs sowie des Sattelauflegers dienen, ebenso wie die ermittelte Winkelgeschwindigkeit, wobei abhängig von diesen beiden Eingangsgrößen das Kennfeld als Ausgangsgröße den Drehwinkel zwischen dem Zugfahrzeug 1 und dem Sattelaufleger 2 ausgibt.

Die Erfindung verfügt gegenüber aus dem Stand der Technik bekannten Lösungen über den Vorteil, dass mit einem konventionellen Königszapfen 3 gearbeitet werden kann, der über keine spezielle konstruktive Ausführung verfügen muss. Sämtliche Baugruppen, die zur Ermittlung des Drehwinkels zwischen dem Zugfahrzeug 1 und dem Sattelaufleger 2 benötigt werden, sind Bestandteil der Sattelkupplung 6 des Zugfahrzeugs 1. Demnach kann die Erfindung bei konventionellen Sattelauflegern 2 mit konventionellen Königszapfen 3 genutzt werden, um den Drehwinkel zwischen Zugfahrzeug 1 und Sattelaufleger 2 zu ermitteln. Dies ist insbesondere beim autonomen Fahren von Zugfahrzeugen 1, an die ein Sattelaufleger 2 gekoppelt ist, von Vorteil, um autonom mit hoher Genauigkeit zu rangieren und Sattelaufleger 2 genau zu manövrieren.

### Bezugszeichen

- 1: Zugfahrzeug
- 2: Sattelaufleger
- 3: Königszapfen
- 3a: Abschnitt
- 4: Ausnehmung
- 5: Verriegelungseinrichtung
- 6: Sattelkupplung
- 7: Kontaktrad
- 8: Drehrichtung Königszapfen
- 9: Drehrichtung Kontaktrad
- 10: Außenfläche
- 11: Außenfläche
- 12: Winkelmesser
- 13: Stelleinrichtung
- 14: Stellbewegung

## Patentansprüche

1. Sattelkupplung (6) eines Zugfahrzeugs (1), an welche ein Königszapfen (3) eines Sattelauflegers (2) koppelbar ist, mit mindestens einem Kontaktrad (7), welches dann, wenn an die Sattelkupplung (6) ein Königszapfen (3) gekoppelt ist, radial außen an einen Abschnitt (3a) des Königszapfens (3) reibschlüssig anstellbar ist, um bei einer Drehung des Abschnitts (3a) des Königszapfens (3) durch Reibkräfte zwischen dem Abschnitt (3a) des Königszapfens (3) und dem jeweiligen Kontaktrad (7) eine Drehung des jeweiligen Kontaktrads (7) zu bewirken, und mit einem dem jeweiligen Kontaktrad (7) zugeordneten Winkelmesser (12), der die Drehung des jeweiligen Kontaktrads (7) messtechnisch erfasst, **dadurch gekennzeichnet, dass** die Sattelkupplung (6) drei Kontakträder (7) mit jeweils einem demselben zugeordneten Winkelmesser (12) aufweist, und dass sämtliche Kontakträder (7) an einer gemeinsamen Stelleinrichtung (13) zusammen mit den Winkelmessern (12) aufgenommen sind, sodass dann über die gemeinsame Stelleinrichtung (13) sämtliche Kontakträder (7) gemeinsam an den Abschnitt (3a) des Königszapfens (3) angestellt werden können, wenn ein Königszapfen (3) an die Sattelkupplung (6) angekoppelt ist.

2. Sattelkupplung nach Anspruch 1, **dadurch gekennzeichnet, dass** das jeweilige Kontaktrad (7) eine gummierte Außenfläche (10) aufweist, die am Abschnitt (3a) des Königszapfens (3) reibschlüssig anstellbar ist.

3. Anordnung aus einer Sattelkupplung (6) eines Zugfahrzeugs (1) nach einem der Ansprüche 1 bis 2, und einem an die Sattelkupplung (6) gekoppelten Königszapfen (3) eines Sattelauflegers (2).

4. Verfahren zur Ermittlung eines Drehwinkels zwischen einem Zugfahrzeug (1) und einem Sattelaufleger (2), die eine Anordnung nach Anspruch 3 aufweisen, wobei dann, wenn das Zugfahrzeug (1) und der an das Zugfahrzeug (1) angekoppelte Sattelaufleger (2) eine definierte Wegstrecke mit einem Zugfahrzeug-Lenkeinschlag von Null zurückgelegt haben, das Messsignal des jeweiligen Winkelmessers (12) initialisiert und bezogen auf diese Initialisierung nachfolgend der Drehwinkel zwischen dem Zugfahrzeug (1) und dem Sattelaufleger (2) auf Basis des Messsignals des jeweiligen Winkelmessers (12) ermittelt wird.

5. Verfahren zur Ermittlung eines Drehwinkels zwischen einem Zugfahrzeug (1) und einem Sattelaufleger (2), die eine Anordnung nach Anspruch 3 aufweisen, wobei dann, wenn das Zugfahrzeug (1) und der an das Zugfahrzeug (1) angekoppelte Sattelaufleger (2) mit konstanter Geschwindigkeit fahren, aus dem Messsignal des jeweiligen Winkelmessers (12) eine Winkelgeschwindigkeit ermittelt und abhängig von der Winkelgeschwindigkeit der Drehwinkel zwischen dem Zugfahrzeug (1) und dem Sattelaufleger (12) ermittelt wird.

## Claims

1. Fifth-wheel coupling (6) of a towing vehicle (1), to which a kingpin (3) of a semi-trailer (2) can be coupled, having at least one contact wheel (7) which, when a kingpin (3) is coupled to the fifth-wheel coupling (6), can be placed frictionally on the radially outer side of a section (3a) of the kingpin (3) in order to effect a rotation of the respective contact wheel (7) by means of frictional forces between the section (3a) of the kingpin (3) and the respective contact wheel (7) during a rotation of the section (3a) of the kingpin (3), and having an angle finder (12) assigned to the respective contact wheel (7), which detects the rotation of the respective contact wheel (7) by measurement, **characterized in that** the fifth-wheel coupling (6) has three contact wheels (7) each having an angle finder (12) assigned to the same, and **in that** all the contact wheels (7), together with the angle finders (12), are accommodated on a common placement device (13), so that all the contact wheels (7) can be placed jointly on the section (3a) of the kingpin (3) via the common placement device (13) when a kingpin (3) is coupled to the fifth-wheel coupling (6).

2. Fifth-wheel coupling according to Claim 1, **characterized in that** the respective contact wheel (7) has a rubberized outer surface (10), which can be placed frictionally on the section (3a) of the kingpin (3).

3. Assembly of a fifth-wheel coupling (6) of a towing vehicle (1) according to either of Claims 1 and 2 and a kingpin (3) of a semi-trailer (2) that is coupled to the fifth-wheel coupling (6).

4. Method for determining a rotational angle between a towing vehicle (1) and a semi-trailer (2), which have an assembly according to Claim 3, wherein, when the towing vehicle (1) and the semi-trailer (2) coupled to the towing vehicle (1) have covered a defined distance with a towing vehicle steering lock of zero, the measured signal from the respective angle finder (12) is initialized and, on the basis of this initialization, the rotational angle between the towing vehicle (1) and the semi-trailer (2) is subsequently determined on the basis of the measured signal from the respective angle finder (12) .

5. Method for determining a rotational angle between a towing vehicle (1) and a semi-trailer (2), which have an assembly according to Claim 3, wherein, when the towing vehicle (1) and the semi-trailer (2) coupled to the towing vehicle (1) are travelling at a constant speed, an angular velocity is determined from the measured signal from the respective angle finder (12), and the rotational angle between the towing vehicle (1) and the semi-trailer (12) is determined as a function of the angular velocity.

## Revendications

1. Sellette d'attelage (6) d'un véhicule tracteur (1), à laquelle un pivot (3) d'une semi-remorque (2) peut être accouplé, comprenant au moins une roue de contact (7) qui, lorsqu'un pivot (3) est accouplé à la sellette d'attelage (6), peut être rapprochée par friction radialement à l'extérieur d'une section (3a) du pivot (3) afin de provoquer en cas de rotation de la section (3a) du pivot (3), par des forces de friction entre la section (3a) du pivot (3) et la roue de contact (7) respective, une rotation de la roue de contact (7) respective, et comprenant un goniomètre (12) associé à la roue de contact (7) respective et qui détecte par une technique de mesure la rotation de la roue de contact (7) respective,
**caractérisée en ce que** la sellette d'attelage (6) présente trois roues de contact (7) munies respectivement du même goniomètre (12) associé, et **en ce que** toutes les roues de contact (7) sont reçues au niveau d'un dispositif de réglage commun (13) avec les goniomètres (12) de sorte que par l'intermédiaire du dispositif de réglage commun (13) toutes les roues de contact (7) peuvent être rapprochées ensemble de la section (3a) du pivot (3) lorsqu'un pivot (3) est accouplé à la sellette d'attelage (6).

2. Sellette d'attelage selon la revendication 1, **caractérisée en ce que** la roue de contact (7) respective présente une surface extérieure caoutchoutée (10) qui peut être rapprochée par friction de la section (3a) du pivot (3).

3. Ensemble composé d'une sellette d'attelage (6) d'un véhicule tracteur (1) selon l'une quelconque des revendications 1 à 2 et d'un pivot (3) d'une semi-remorque (2), accouplé à la sellette d'attelage (6).

4. Procédé permettant de déterminer un angle de rotation entre un véhicule tracteur (1) et une semi-remorque (2) qui présentent un ensemble selon la revendication 3, dans lequel lorsque le véhicule tracteur (1) et la semi-remorque (2) accouplée au véhicule tracteur (1) ont parcouru un trajet défini avec un rayon de braquage de véhicule tracteur de zéro, le signal de mesure du goniomètre (12) respectif est initialisé, et par rapport à cette initialisation, l'angle de rotation entre le véhicule tracteur (1) et la semi-remorque (2) est déterminé par la suite sur la base du signal de mesure du goniomètre (12) respectif.

5. Procédé permettant de déterminer un angle de rotation entre un véhicule tracteur (1) et une semi-remorque (2) qui présentent un ensemble selon la revendication 3, dans lequel lorsque le véhicule tracteur (1) et la semi-remorque (2) accouplée au véhicule tracteur (1) roulent à vitesse constante, une vitesse angulaire est déterminée à partir du signal de mesure du goniomètre (12) respectif, et l'angle de rotation entre le véhicule tracteur (1) et la semi-remorque (2) est déterminé en fonction de la vitesse angulaire.
